# EUROPÄISCHE PATENTSCHRIFT

(11) **EP 3 266 293 B1**
(45) Veröffentlichungstag und Bekanntmachung des Hinweises auf die Patenterteilung: **01.01.2020**
(21) Anmeldenummer: 17401068.6
(22) Anmeldetag: 27.06.2017
(51) Int. Cl.: A01C 5/06

(54) **LANDWIRTSCHAFTLICHE SÄMASCHINE MIT ZUSTREICH- UND/ODER ANDRÜCKVORRICHTUNG**
AGRICULTURAL SEEDING MACHINE WITH CLOSING AND/OR PRESSING DEVICE
SEMOIR AGRICOLE COMPRENANT UN DISPOSITIF DE RECOUVREMENT ET/OU DE PRESSION

(30) Priorität: 07.07.2016 DE 102016112460
(43) Veröffentlichungstag der Anmeldung: 10.01.2018
(73) Patentinhaber: Amazonen-Werke H. Dreyer GmbH & Co. KG, 49205 Hasbergen (DE)
(72) Erfinder: Helms, Helge, 26125 Oldenburg (DE); Schröder, Olaf, 27798 Hude (DE)

(56) Entgegenhaltungen:
- EP-A1- 2 633 747
- EP-A1- 2 868 181
- EP-A1- 2 912 933
- DE-A1-102009 008 244

## Beschreibung

Die Erfindung betrifft eine landwirtschaftliche Sämaschine gemäß des Oberbegriffes des Patentanspruches 1.

Eine ähnliche Sämaschine ist in DE 696 05 466 T2 beschrieben. Die dort beschriebene Sämaschine weist einen Hauptrahmen auf, an dem über Halteelemente mehrere als Säschareinheiten ausgebildete Vorrichtungen zur Ablage von Saatgut in den Boden angeordnet sind. Auf dem Hauptrahmen stützt sich ein Vorratsbehälter zur Bevorratung von auszubringendem Saatgut und/oder Düngemittel ab. Die Sämaschine ist weiterhin mit einer Zustreichvorrichtung ausgestattet. Die Zustreichvorrichtung weist mehrere Zustreichelemente auf, welche an einem quer zur Fahrtrichtung angeordneten Tragbalken befestigt sind. An dem Tragbalken ist zumindest ein Tragarm befestigt, welcher in seinem in Fahrtrichtung vorderen Bereich gelenkig an einem Rahmenelement befestigt ist. Zur Einstellung der Zustreichvorrichtung umfasst die beschriebene Sämaschine Einstellelemente deren Zusammenwirken ein Ausheben, Absenken und/oder die Einstellung der Arbeitstiefe und/oder des Arbeitsdrucks der Zustreichvorrichtung bewirkt.

Aus der EP 2 912 933 A1, der EP 2 868 181 A1 und der DE 20 2014 009 404 U1 ist eine Sämaschine bekannt, welche einen Hauptrahmen sowie einen an diesem angeordneten Ladesteg umfasst. Zur Ausbringung von Saatgut weist die Sämaschine mehrere am Hauptrahmen angelenkte Säschareinheiten auf. Diesen läuft eine Zustreicheinrichtung nach, welche einen quer zur Fahrtrichtung angeordneten Tragbalken umfasst, welcher an zumindest einem in Fahrtrichtung nach vorn ragenden im vorderen Bereich gelenkig befestigen Tragarm befestigt ist und an dem quer zur Fahrtrichtung mehrere Zustreichelemente angeordnet sind. Die Tragarme der Zustreichvorrichtung sind an dem den Ladesteg tragenden Rahmenelement angelenkt. Diese Druckschriften offenbaren somit den Oberbegriff des Patentanspruchs 1 mit einer Zustreichvorrichtung.

In beiden beschriebenen Ausführungsformen sind die Zustreichvorrichtungen nicht unmittelbar am Hauptrahmen der Sämaschine angelenkt. Bei derartigen Sämaschinen ist es üblich, dass die in den Boden eingreifenden Arbeitselemente, wie beispielsweise Säschare und/oder Zustreichvorrichtungen zum Erreichen eines bestimmten Arbeitsergebnisses mit einem bestimmten Arbeitsdruck beaufschlagt, ausgehoben und/oder abgesenkt werden können. Für diese Zwecke müssen geeignete Kräfte auf die beispielsweise die Zustreichvorrichtung tragenden Tragarme übertragen werden.

Die beschriebenen Ausgestaltungen sind daher nachteilig, weil die Kraftübertragung zur Einstellung der Zustreichvorrichtung von Rahmenelementen ausgeht, die nicht dem Hauptrahmen zugeordnet und somit nicht zur Aufnahme und/oder Übertragung großer Kräfte ausgelegt sind. Es besteht dabei die Gefahr, dass nicht ausreichend Kraft auf die Zustreichvorrichtung übertragen werden kann, um ein zufriedenstellendes Arbeitsergebnis zu erreichen. Zudem besteht die Gefahr, dass die zur Befestigung der Zustreichvorrichtung genutzten Rahmenelemente durch Einwirkungen zu hoher Kräfte beschädigt werden.

Der Erfindung liegt daher die Aufgabe zugrunde, eine Anordnung bereitzustellen, die geeignet ist, die Nachteile des Stands der Technik abzustellen und eine Einstellung der Zustreich- und/oder Andrückvorrichtung zu ermöglichen.

Diese Aufgabe wird erfindungsgemäß dadurch gelöst, dass die Zustreich- und/oder Andrückvorrichtung mittels eines zentralen Einstellelements ausgehoben, abgesenkt und/oder mit einem Druck gegen den Erdboden beaufschlagt wird, wobei die Zustreich- und/oder Andrückvorrichtung einen Querträger umfasst, welcher um eine horizontal quer zur Fahrtrichtung verlaufende Achse drehbar gelagert am Hauptrahmen angeordnet ist, und der zumindest eine Tragarm in seinem vorderen Bereich über Federelemente an dem Querträger befestigt ist.

Dies ist besonders vorteilhaft, da durch die Befestigung des zumindest einen Tragarms an dem drehbar gelagerten Querträger die Rotationsbewegung des drehbar gelagerten Querträgers in einfacher und zuverlässiger Weise auf den zumindest einen Tragarm übertragen wird. Der zumindest eine Tragarm wirkt dann hebelähnlich und setzt durch Verschwenken die Rotationsbewegung des Querträgers in eine vertikale Bewegung der an dem Tragarm befestigten Zustreich- und/oder Andrückvorrichtung um. Durch die durch den Durchmesser des Querträgers und die Länge des Tragarms festgelegten Hebelverhältnisse kann in vorteilhafter Weise eine geringe Rotationsbewegung in eine vergleichsweise starke vertikale Bewegung des Tragarms umgesetzt werden.

Durch Befestigung des zumindest einen Tragarms am drehbargelagerten Querträger über Federelemente wird eine zusätzliche Vorspannung der Zustreich- und/oder Andrückelemente gegen den Erdboden erreicht. In ihrer Arbeitsposition ist die Zustreich- und/oder Andrückvorrichtung auf dem Erdboden absetzt und mit einem bestimmten Arbeitsdruck beaufschlagt, um beispielsweise eine bestimmte Arbeitstiefe zu erreichen. Die Befestigung über Federelemente wirkt dabei in vorteilhafter Weise beispielsweise als Überlastsicherung. So kann die Zustreich- und/oder Andrückvorrichtung trotz Druckbeaufschlagung beim Auftreffen auf ein im Erdboden befindliches Hindernis nach oben ausweichen. Analog ist ein Ausweichen nach oben beim Überfahren von Bodenwellen möglich. Die erfindungsgemäße Anordnung der Zustreich- und/oder Andrückvorrichtung ist geeignet, Beschädigungen der Sämaschine zu verhindern.

Die durch die Federelemente erreichte Vorspannung der Zustreich- und/oder Andrückvorrichtung bewirkt zum Zweck der Bodenkonturverfolgung in analoger Weise ein Auslenken der Zustreich- und/oder Andrückvorrichtung nach unten. Somit kann die Zustreich- und/oder Andrückvorrichtung in vorteilhafter Weise auch einer welligen Erdbodenoberfläche folgen. Die Zustreich- und/oder Andrückvorrichtung hebt auch unter diesen Bedingungen nicht stellenweise vom Erdboden ab. Ein gleichmäßiges, qualitativ gleichwertiges Arbeitsergebnis ist sichergestellt.

Ein weiterer Vorteil wird dadurch erreicht, dass ein Stellhebel mit dem Querträger formschlüssig und drehfest verbunden ist. Um die Zustreich- und/oder Andrückvorrichtung der Sämaschine erfindungsgemäß einstellen zu können, ist eine Drehung des drehbar gelagerten Querträgers vorgesehen. Diese Drehung wird mittels eines zentralen Einstellelements erreicht. Durch drehfeste Verbindung des Querträgers mit einem Stellhebel ist ein Angreifen des zentralen Einstellelements an diesem Stellhebel möglich. Die Hebelverhältnisse werden durch die Länge des Stellhebels und den Durchmesser des Querträgers festgelegt. Somit ermöglicht die Verwendung eines Stellhebels eine energieeffiziente und exakte Einstellung der Rotationsbewegung des Querträgers.

Aus den beschriebenen Gründen ist es vorteilhaft, dass eine erste Seite des zentralen Einstellelements mittels einer gelenkartigen Verbindung an dem Stellhebel angelenkt ist. Das zentrale Einstellelement muss nicht auf den Querträger wirken, sondern kann unter energieeffizienter Ausnutzung geeigneter Hebelverhältnisse eine Rotationsbewegung des drehbar gelagerten Querträgers bewirken. Zusätzlich kann durch die gelenkige Verbindung von zentralem Einstellelement und Stellhebel eine Exzenterwirkung erzielt. Dadurch muss das zentrale Einstellelement selbst keine rotierende Bewegung ausführen, um eine Rotation des Querträgers zu bewirken.

Es ist vorteilhaft, dass das zentrale Einstellelement längenveränderlich, beispielsweise als Gewindespindel oder als Hydraulikzylinder, ausgebildet ist. Längenveränderliche Bau- und/oder Einstellelemente sind besonders einfach und zuverlässig konstruiert. Dadurch sind sie kostengünstig. Zusammenwirkend mit dem zuvor beschriebenen Stellhebel kann die lineare Bewegung des längenveränderlichen, zentralen Einstellelements in zuverlässiger und robuster Weise in eine Rotationsbewegung des Querträgers umgesetzt werden. Das längenveränderliche Einstellelement kann beispielsweise als Hydraulikzylinder, Gewindespindel oder elektrisch angetriebener Linearmotor ausgeführt sein.

Ein besonderer Vorteil ergibt sich daraus, dass die zweite Seite des zentralen Einstellelements an dem Hauptrahmen angelenkt ist. Durch eine derartige Ausführungsform das zentrale Einstellelement kraftschlüssig mit dem Hauptrahmen verbunden. Da auch die Zustreich- und/oder Andrückvorrichtung mittels des drehbar gelagerten Querträgers kraftschlüssig mit dem Hauptrahmen der Sämaschine verbunden ist, sind sämtliche Elemente, die der Kraftübertragung auf die Zustreich- und/oder Andrückvorrichtung dienen mit dem Hauptrahmen der Sämaschine verbunden. Somit ist eine maximale Kraftübertragung auf die Zustreich- und/oder Andrückvorrichtung sichergestellt.

Ein weiterer Vorteil ergibt sich daraus, dass der zumindest eine Tragarm der Zustreich- und/oder Andrückvorrichtung unter Einschluss von Federelementen den Querträger der Zustreich- und/oder Andrückvorrichtung umfassend an dem Querträger befestigt ist. Diese Ausführungsform stellt eine besonders einfache, zuverlässige und kostengünstige kraftschlüssige Verbindung zwischen Querträger und Tragarm dar. Zusätzlich ist durch die umschlossenen Federelemente die Federwirkung und/oder die Vorspannung der Zustreich- und/oder Andrückvorrichtung gegenüber dem Erdboden gewährleistet.

Es ist dabei vorteilhaft, dass die Federelemente aus Gummi oder Kunststoff gefertigt sind. Derartig gefertigte Federelemente sind einfach und günstig herstellbar. Zudem sind sie ohne großen Konstruktionsaufwand erfindungsgemäß einsetzbar. Sie zeichnen sich insbesondere dadurch auch, dass sie fertigungstechnisch in Form und Größe leicht auf den ihnen zugedachten Einsatzzweck anpassbar und besonders unempfindlich gegen Verschleiß sind.

Es ist vorteilhaft, dass eine Längenveränderung des längenveränderlichen zentralen Einstellelements ein Verdrehen des drehbar gelagerten Querträgers bewirkt. Auf diese Weise ist die zur Einstellung der Zustreich- und/oder Andrückvorrichtung genutzte Mechanik in der beschriebenen Weise aus zusammenwirkenden Hebeln aufgebaut. Es werden keine vergleichsweise wartungsintensiven und/oder verschleißanfälligen rotierenden Bauteile zur Realisierung der Rotationsbewegung des Querträgers benötigt.

Ein weiterer Vorteil wird erreicht, indem ein Verdrehen des drehbar gelagerten Querträgers eine vertikale Schwenkbewegung des Tragarms der Zustreich- und/oder Andrückvorrichtung bewirkt. Auf diese Weise sind der Arbeitsdruck und/oder die Arbeitstiefe der Zustreich- und/oder Andrückvorrichtung über die Rotationsbewegung des Querträgers einstellbar. Ein Ausheben und/oder Absenken der Zustreich- und/oder Andrückvorrichtung wird in analoger Weise erreicht. Vorzugsweise fällt dabei die Schwenkachse der Tragarme mit der Rotationsachse des Querträgers zusammen.

Es ergibt sich ein Vorteil dadurch, dass durch ein Verdrehen des drehbar gelagerten Querträgers bei auf dem Erdboden aufgesetzter Zustreich- und/oder Andrückvorrichtung eine Beeinflussung des Arbeitsdrucks der Zustreich- und/oder Andrückvorrichtung bewirkt wird. Dadurch erfolgt über eine einfach aufgebaute mechanische Hebelanordnung die Einstellung des Arbeitsdrucks der Zustreich- und/oder Andrückvorrichtung. Zudem ergibt sich durch die durch den Durchmesser des Querträgers und die Länge der Tragarme festgelegten Hebelverhältnisse der Vorteil, dass durch geringfügige Rotationsbewegungen des Querträgers den Hebelverhältnissen entsprechend große vertikale Bewegungen der Zustreich- und/oder Andrückvorrichtung bewirkt werden. In analoger Weise führt dies zu den Hebelverhältnissen entsprechend großen Änderungen des Arbeitsdrucks bereits bei geringfügigen Rotationsbewegungen des Querträgers.

Es ist vorteilhaft, dass die Federelemente geeignet sind, Stöße und/oder Lastspitzen der vertikalen Bewegung des Tragarms der Zustreich- und/oder Andrückvorrichtung abzufangen. Somit wird der Zustreich- und/oder Andrückvorrichtung während des Arbeitsvorgangs das Folgen der Bodenkontur unter der Vorspannung der Federelemente ermöglicht. Zudem werden Beschädigungen der Zustreich- und/oder Andrückvorrichtung aufgrund unebener Bodenverhältnisse verhindert.

Ein besonderer Vorteil wird erreicht, indem dem zumindest einen Tragarm zumindest annähernd gegenüberliegend zumindest ein Ausleger an dem Querträger befestigt ist. Somit ist sichergestellt, dass dieser Ausleger der Schwenkbewegung des Tragarms rotationssymmetrisch um die vorzugsweise der Rotationsachse des Querträgers entsprechende Schwenkachse des Tragarmes folgt. Mithilfe eines derartigen Auslegers wird eine Anordnung geschaffen, die geeignet ist, die Schwenkbewegung der Tragarms und somit die vertikale Bewegung der Zustreich- und/oder Andrückvorrichtung zu begrenzen.

Um die Schwenkbewegung der Tragarms und somit die vertikale Bewegung der Zustreich- und/oder Andrückvorrichtung zu begrenzen, ist es vorteilhaft, dass der zumindest eine Ausleger geeignet ist, als Anschlagselement gegen den Hauptrahmen zu wirken. Durch diese Ausführungsform wird erreicht, dass beispielsweise bei einem Ausheben der Sämaschine die über den Querträger in vertikaler Richtung beweglich gelagerte und über die Federelemente nach unten gegen den Boden vorgespannte Zustreich- und/oder Andrückvorrichtung nicht nach unten fallen kann. Ein Fallen der Zustreich- und/oder Andrückvorrichtung nach unten führt zu der Gefahr, dass die Zustreich- und/oder Andrückvorrichtung auf die Säschareinheiten fallen kann. Das würde zu erheblichen Beschädigungen der Sämaschine führen. Die erfindungsgemäße Ausführungsform verhindert das Auftreten derartiger Beschädigungen. Durch das Anschlagen des Auslegers am Hauptrahmen ist sichergestellt, dass die wirkenden Kräfte in Bauteile der Sämaschine eingeleitet werden, welche zur Aufnahme großer Kräfte geeignet sind. Somit werden weitere Beschädigungen der Sämaschine ausgeschlossen.

Weitere Einzelheiten der Erfindung sind der Beispielsbeschreibung und den Zeichnungen zu entnehmen. Die Zeichnungen zeigen
- Fig.1: eine landwirtschaftliche Sämaschine in perspektivischer Ansicht von schräg hinten,
- Fig.2: wesentliche Teile einer Sämaschine mit ausgehobener Zustreich- und/oder Andrückvorrichtung in Fahrtrichtung linksseitigem Querschnitt,
- Fig.3: wesentliche Teile einer Sämaschine mit abgesenkter Zustreich- und/oder Andrückvorrichtung in Fahrtrichtung linksseitigem Querschnitt,
- Fig.4: die Zustreich- und/oder Andrückvorrichtung einer Sämaschine in perspektivischer Ansicht von schräg hinten,
- Fig.5: die Federelemente und Stellhebel in detaillierter Ansicht perspektivisch von schräg hinten und

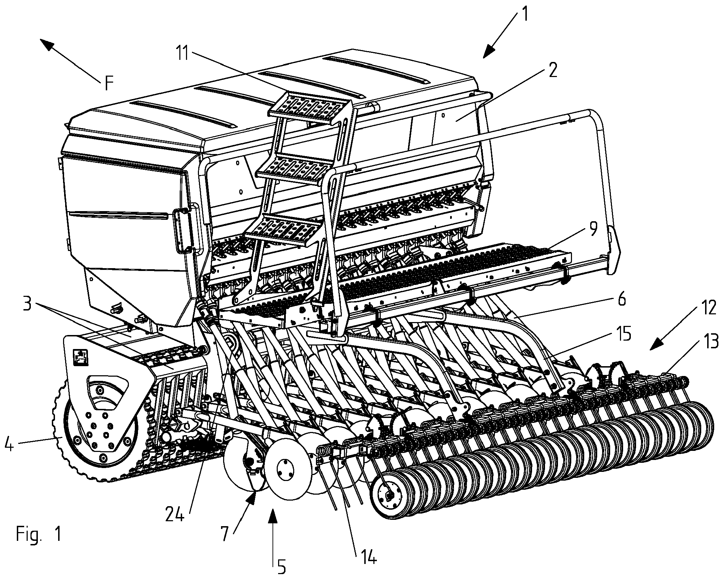

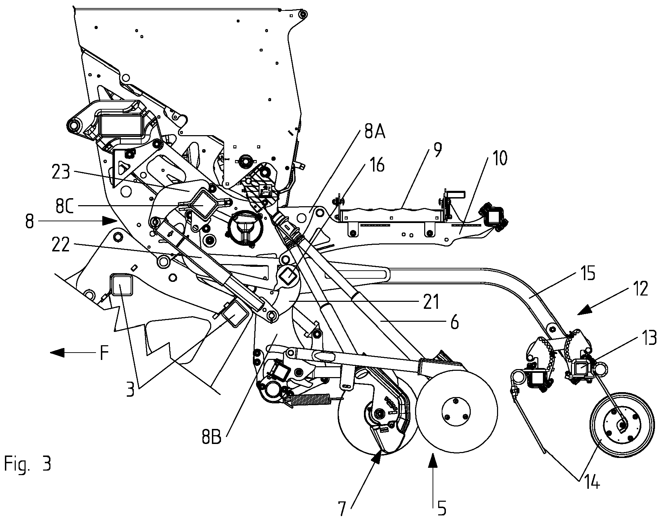

Eine landwirtschaftliche Sämaschine 1, welche im gewählten Ausführungsbeispiel der Figuren 1 bis 6 zum Anbau an eine landwirtschaftliche Zugmaschine vorgesehen ist, weist einen Vorratsbehälter 2 zur Bevorratung von auszubringendem Material, vorzugsweise Saatgut und/oder Dünger, auf. Der Vorratsbehälter 2 stützt ist auf dem Rahmen 3 einer Walzeneinheit 4 der Sämaschine 1 ab, wie in Fig. 1 gezeigt ist.

Der untere Bereich des Vorratsbehälters 2 ist als Auslaufbereich ausgestaltet, in welchem nicht dargestellte Auslauföffnungen angeordnet sind. Über die Auslauföffnungen wird das zu verteilende Material an zu Ausbringelementen 5 führende Leitungen 6 abgegeben. Die Ausbringelemente 5 sind als Säschareinheiten ausgebildet und in Fahrtrichtung F hinter der Walzeneinheit 4 angeordnet.

Die Ausbringelemente 5 sind geeignet, um Saatgut und/oder Dünger im Erdboden abzulegen. Dazu weisen sie jeweils Furchenöffnungsvorrichtungen 7 auf, welche in den Fig. 1 bis 3 als Scheibenschare, insbesondere als Doppelscheibenschare, ausgebildet sind. Zusätzlich weisen die Ausbringelemente 5 nicht dargestellte Saatgutablagevorrichtungen zur Abgabe von Saatgut in die geöffnete Furche sowie nicht dargestellte Tiefenführungselemente auf.

Die Sämaschine 1 weist einen mehrere Hauptrahmenelemente umfassenden Hauptrahmen 8 auf.

Oberhalb der Ausbringelemente 5 ist ein Ladesteg 9 angeordnet. Der Ladesteg 9 wird von einem Rahmenelement 10 getragen, welches am Hauptrahmenelement 8A des Hauptrahmens 8 der Sämaschine 1 angeordnet ist. Über einen Aufstieg 11 wird der Ladesteg 9 beispielsweise zum Beladen des Vorratsbehälters 2 oder zur Sichtkontrolle des Behälterfüllstandes durch einen Bediener betreten. Der Aufstieg 11 ist verschwenkbar am Ladesteg 9 angelenkt.

In Fahrtrichtung F hinter den Ausbringelementen 5 ist eine Zustreich- und/oder Andrückvorrichtung 12 angeordnet. Die Zustreich- und/oder Andrückvorrichtung 12 umfasst im Beispiel der Fig. 1 bis 4 einen quer zur Fahrtrichtung F angeordneten Tragbalken 13. An dem Tragbalken 13 sind mehrere Zustreich- und/oder Andrückelemente 14 angeordnet. Die Zustreich- und/oder Andrückelemente 14 dienen nach Ablage des Saatguts in den durch die Furchenöffnungsvorrichtungen 7 geöffneten Furchen dem Schließen der Furchen, der Bedeckung des abgelegten Saatguts mit Erde und/oder dem Andrücken des Saatgut und/oder des das Saatgut bedeckenden Bodens. Im gewählten Beispiel sind die Zustreich- und/oder Andrückelemente 14 als Striegel ausgebildet, wie die Fig. 1 bis 4 zeigen. Alternativ oder zusätzlich ist eine Ausgestaltung beispielsweise als Rollen denkbar.

Wie die Fig. 1 bis 4 zeigen, ist der die Zustreich- und/oder Andrückelemente 13 tragende Tragbalken 13 an zwei in Fahrtrichtung F nach vorn ragenden Tragarmen 15 befestigt. Die Tragarme 15 sind oberhalb der Ausbringelemente 5 und unterhalb des Ladestegs 9 angeordnet. Das in Fahrtrichtung F nach vorn ragende Ende der Tragarme 15 ist mit einem Querträger 16 verbunden.

Der Querträger 16 ist als Vierkantrohr ausgebildet und horizontal quer zur Fahrtrichtung F am Hauptrahmen angeordnet. Der Querträger 16 ist um seine Längssachse drehbar gelagert und stützt sich auf dem Hauptrahmenelement 8B der Sämaschine 1 ab.

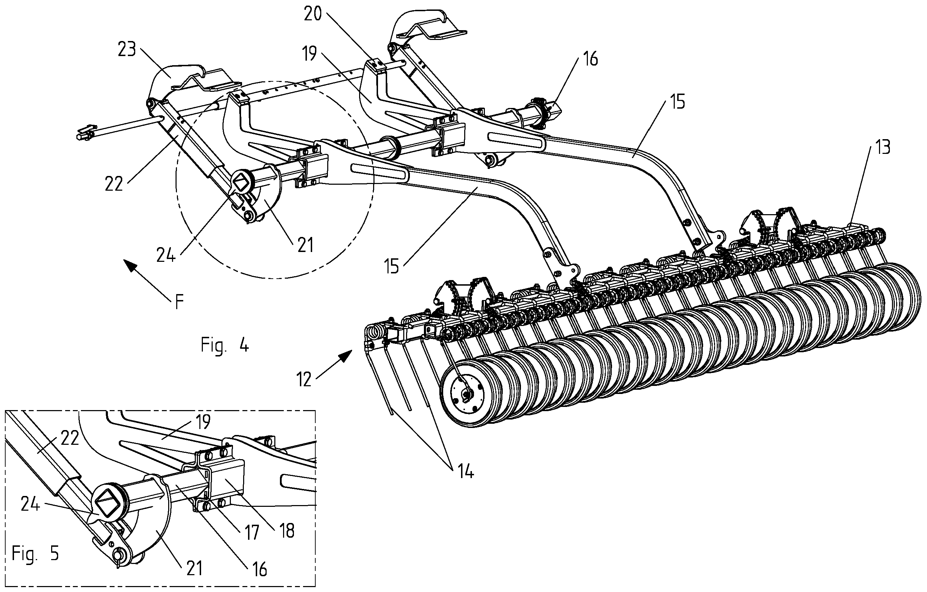

Die Fig. 4 und 5 zeigen die Befestigung des Tragarms 15 an dem Querträger 16 im Detail. An den Seitenflächen des Querträgers 16 liegen als Federelemente 17 dienende Gummielemente an. Die Federelemente 17 werden mittels einer schellenartigen Klemmvorrichtung 18 umschlossen. Im Beispiel der Fig. 4 und 5 weisen die Federelemente 17 einen im Wesentlichen dreiecksförmigen Querschnitt auf. Der Querträger 16 mitsamt der Federelemente 17 wird dann formschlüssig von der Klemmvorrichtung 18 umschlossen. Die Federelemente 17 können ebenso einen runden oder elliptischen Querschnitt aufweisen. Ebenso sind andere Ausgestaltungen der Federelemente, beispielsweise in Form von Schraubenfedern, denkbar.

An der schellenartigen Klemmvorrichtung 18 ist formschlüssig und drehfest der Tragarm 15 befestigt. Gegenüber vom Tragarm 15 ist in analoger Weise formschlüssig und drehfest ein Ausleger 19 befestigt. Der Ausleger 18 ist nach oben abgewinkelt geformt uns weist ein Anschlagselement 20 auf.

Der Querträger 16 ist am Hauptrahmenelement 8B des Hauptrahmens 8 drehbar gelagert. Die Rotationsachse des Querträgers 16 verläuft durch den Mittelpunkt der Querschnittsfläche des Querträgers 16. Durch die drehfeste Verdingung des Querträgers mit der Klemmvorrichtung 18 fällt die Rotationsachse der Klemmverbindung 18 mit der Rotationsachse des Querträgers 16 zusammen. Durch die weiterhin drehfesten Verbindungen von Tragarm 15 und Ausleger 19 mit der Klemmvorrichtung 18 sind Tragarm 15 und Ausleger 19 verschwenkbar. Die Schwenkachsen des Tragarm 15 und Ausleger 19 fallen mit der Rotationsachse des Querträgers 16 zusammen.

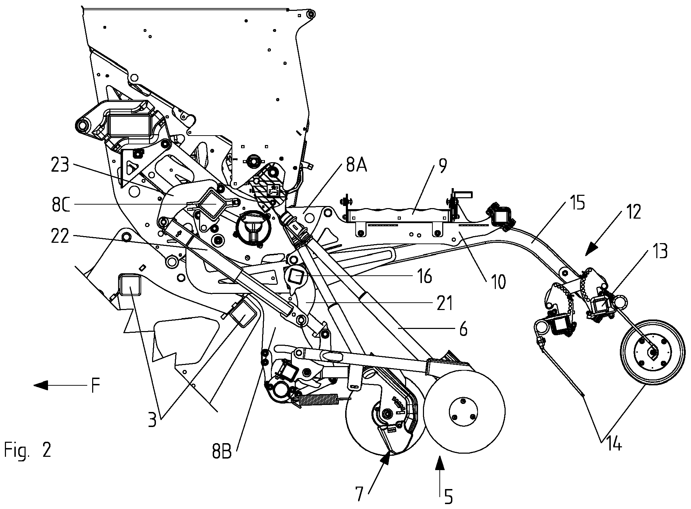

Drehfest mit dem Querträger 16 ist ein Stellhebel 21 verbunden. An dem freien Ende des Stellhebels 21 ist die zentrale Einstelleinheit 22 angelenkt. Die zentrale Einstelleinheit 22 ist längenveränderlich und kann als Hydraulikzylinder, Gewindespindel oder elektrisch angetriebener Linearmotor ausgeführt sein. Das zweite Ende der zentralen Einstelleinheit 22 ist drehfest mit dem Hauptrahmenelement 8C verbunden. Im Beispiel der Fig. 2 bis 4 ist dazu hilfsweise ein weiterer Stellhebel 23 vorgesehen, welcher drehfest und formschlüssig mit dem Hauptrahmenelement 8C verbunden ist und an dem das zentrale Einstellelement 22 angelenkt ist. Das Hauptrahmenelement 8C wirkt somit als Widerlager des zentralen Einstellelements 22.

Durch eine Längenänderung des zentralen Einstellelements 22 wird der mit dem Querträger 16 verbundene Stellhebel 21 in eine Schwenkbewegung um die Rotationsachse des Querträgers 16 versetzt. Diese Schwenkbewegung des Stellhebels 21 wird in eine Rotationsbewegung des Querträgers 16 und des Klemmelements 18 überführt. Über die drehfesten Verbindungen zwischen Tragarm 15 und Klemmelement 18 wird die Rotationsbewegung des Querträgers 16 in eine vertikale Schwenkbewegung der Tragarme 15 umgesetzt. Über diese vertikale Schwenkbewegung der Tragarme 15 wird das Ausheben und/oder Absenken der Zustreich- und/oder Andrückvorrichtung 1 bewirkt sowie der Arbeitsdruck und die Arbeitstiefe der Zustreich- und/oder Andrückvorrichtung 12 eingestellt.

Durch den Einschluss der Federelemente 17 durch die den Querträger 16 und Federelemente 17 umfassende Klemmvorrichtung 18 ist die Verbindung zwischen Querträger 16 und Klemmvorrichtung 18 formschlüssig, aber aufgrund der Federwirkung der Federelemente 17 nur eingeschränkt drehfest. Bei einem Verdrehen von Querträger 16 und Klemmelement 18 gegeneinander werden die Federelemente 17 verformt, bis die Federspannung der Federelemente 17 ausreichend groß ist somit das Folgen der Rotationsbewegung des Querträgers 16 durch die Klemmvorrichtung 18 erzwungen wird.

Die Federelemente 17 bewirken auf diese Weise beispielsweise bei auf dem Erdboden abgesetzter, in Arbeitsposition befindlicher Zustreich- und/oder Andrückvorrichtung 12 eine Vorspannung gegen den Erdboden. Dadurch wird der Arbeitsdruck und/oder die Arbeitstiefe der Zustreich- und/oder Andrückvorrichtung 12 eingestellt. Es wird bei unebenen Bodenverhältnissen somit eine Verfolgung der Bodenkonturen ermöglicht. Beispielsweise ist ein Ausweichen der Zustreich- und/oder Andrückvorrichtung 12 nach oben beispielsweise bei Überlast gegen die Federwirkung der Federelemente 17 möglich. Nach unten kann vermittels der vorgespannten Federelemente 17 die Zustreich- und/oder Andrückvorrichtung 12 in analoger Weise der Bodenkontur folgen.

Ein Ausheben und/oder Absenken der Zustreich- und/oder Andrückvorrichtung 12 wird analog zur beschriebenen Weise durch eine entsprechend große Rotationsbewegung des Querträgers 16 erreicht.

Die Hebelverhältnisse zwischen den Tragarmen 15 und dem Querträger 16 sowie zwischen dem Querträger 16 und dem Stellhebel 21 werden durch den Durchmesser des Querträgers 16 und die Länge der Tragarme 15 bzw. des Stellhebels 21 festgelegt. Dadurch wird eine große Schwenkbewegung der Tragarme 15 und/oder eine große Änderung des Arbeitsdrucks der Zustreich- und/oder Andrückvorrichtung 12 durch eine vergleichsweise kleine Rotationsbewegung des Querträgers 16.

Wird die Sämaschine 1 ausgehoben, schwenkt die Zustreich- und/oder Andrückvorrichtung 12 aufgrund der Vorspannung durch die Federelemente 17 nach unten. Damit die Sämaschine keinen Schaden nimmt, weil beispielsweise bei einer zu großen Schwenkbewegung nach unten die Zustreich- und/oder Andrückvorrichtung 12 mit den Ausbringelementen 5 kollidiert, muss die Schwenkbewegung nach unten begrenzt werden. Dazu sind die Ausleger 19 vorgesehen, welche gegenüber den Tragarmen 15 an dem Querträger befestigt sind. Bei einer ausreichend großen Schwenkbewegung nach unten kommen die Anschlagselemente 20 zur Anlage an das Hauptrahmenelement 8C des Hauptrahmens 8. Somit wird die von der Schwenkbewegung ausgehende Energie von einem Bauteil aufgenommen, welches zur Aufnahme großer Kräfte geeignet ist. Beschädigungen der Sämaschine 1 können somit vermieden werden.

Drehfest mit dem Querträger 16 ist ein Anzeigeelement 24 verbunden, welches einen Zeiger aufweist, dessen Ausrichtung mit der Ausrichtung des Querträgers übereinstimmt. Mittels des Anzeigeelements 24 wird über die drehfeste Verbindung mit dem Querträger 16 die aktuelle Position der Zustreich- und/oder Andrückvorrichtung 12 angezeigt. Die Zustreich- und/oder Andrückvorrichtung 12 befindet sich hinter dem Vorratsbehälter 2 der Sämaschine 1, sodass sie von einem Bediener in der Kabine einer landwirtschaftlichen Zugmaschine, an welche die Sämaschine 1 angebaut ist, nicht eingesehen werden kann. Dem Bediener der Sämaschine 1 ist somit die Kontrolle der Position der Zustreich- und/oder Andrückvorrichtung 12 mittels des Anzeigeelements 24 leicht möglich.

## Patentansprüche

1. Landwirtschaftliche Sämaschine (1) aufweisend einen Hauptrahmen (8), ein an dem Hauptrahmen (8) angeordnetes einen Ladesteg (9) tragendes Rahmenelement (10), mehrere an dem Hauptrahmen (8) über Halteelemente angelenkte Säschareinheiten (5) zur Ausbringung zu verteilenden Saatguts, sowie eine Zustreich- und/oder Andrückvorrichtung (12), welche zumindest einen quer zur Fahrrichtung (F) angeordneten Tragbalken (13) umfasst, der an zumindest einem in Fahrtrichtung (F) nach vorn ragenden im vorderen Bereich gelenkig befestigten Tragarm (15) befestigt ist und an dem quer zur Fahrtrichtung (F) mehrere Zustreich- und/oder Andrückelemente (14) angeordnet sind, **dadurch gekennzeichnet, dass** die Zustreich- und/oder Andrückvorrichtung (12) mittels eines zentralen Einstellelements (22) ausgehoben, abgesenkt und/oder mit einem Druck gegen den Erdboden beaufschlagt wird, wobei die Zustreich- und/oder Andrückvorrichtung (12) einen Querträger (16) umfasst, welcher um eine horizontal quer zur Fahrtrichtung (F) verlaufende Achse drehbar gelagert am Hauptrahmen (8) angeordnet ist, und der zumindest eine Tragarm (15) in seinem vorderen Bereich über Federelemente (17) an dem Querträger (16) befestigt ist.

2. Sämaschine (1) nach Anspruch 1, **dadurch gekennzeichnet, dass** ein Stellhebel (21) mit dem Querträger (16) formschlüssig und drehfest verbunden ist.

3. Sämaschine (1) nach Anspruch 2, **dadurch gekennzeichnet, dass** eine erste Seite des zentralen Einstellelements (22) mittels einer gelenkartigen Verbindung an dem Stellhebel (21) angelenkt ist.

4. Sämaschine (1) nach zumindest einem der vorangegangenen Ansprüche, **dadurch gekennzeichnet, dass** das zentrale Einstellelement (22) längenveränderlich, beispielsweise als Gewindespindel oder als Hydraulikzylinder, ausgebildet ist.

5. Sämaschine (1) nach Anspruch 3, **dadurch gekennzeichnet, dass** die zweite Seite des zentralen Einstellelements (22) an dem Hauptrahmen (8) angelenkt ist.

6. Sämaschine (1) nach zumindest einem der vorangegangenen Ansprüche, **dadurch gekennzeichnet, dass** der zumindest eine Tragarm (15) der Zustreich- und/oder Andrückvorrichtung (12) unter Einschluss von Federelementen (17) den Querträger (16) der Zustreich- und/oder Andrückvorrichtung (12) umfassend an dem Querträger (16) befestigt ist.

7. Sämaschine (1) nach zumindest einem der vorangegangenen Ansprüche, **dadurch gekennzeichnet, dass** die Federelemente (17) aus Gummi oder Kunststoff gefertigt sind.

8. Sämaschine (1) nach Anspruch 4, **dadurch gekennzeichnet, dass** eine Längenveränderung des längenveränderlichen zentralen Einstellelements (22) ein Verdrehen des drehbar gelagerten Querträgers (16) bewirkt.

9. Sämaschine (1) nach zumindest einem der vorangegangenen Ansprüche, **dadurch gekennzeichnet, dass** ein Verdrehen des drehbar gelagerten Querträgers (16) eine vertikale Schwenkbewegung des Tragarms (5) der Zustreich- und/oder Andrückvorrichtung (12) bewirkt.

10. Sämaschine (1) nach zumindest einem der vorangegangenen Ansprüche, **dadurch gekennzeichnet, dass** durch ein Verdrehen des drehbar gelagerten Querträgers (16) bei auf dem Erdboden aufgesetzter Zustreich- und/oder Andrückvorrichtung (12) eine Beeinflussung des Arbeitsdrucks der Zustreich- und/oder Andrückvorrichtung (12) bewirkt wird.

11. Sämaschine (1) nach zumindest einem der vorangegangenen Ansprüche, **dadurch gekennzeichnet, dass** dem zumindest einen Tragarm (15) zumindest annähernd gegenüberliegend zumindest ein Ausleger (19) an dem Querträger (16) befestigt ist.

12. Sämaschine (1) nach Anspruch 11, **dadurch gekennzeichnet, dass** der zumindest eine Ausleger (19) geeignet ist, als Anschlagselement (20) gegen den Hauptrahmen (8) zu wirken.

## Claims

1. Agricultural seeding machine (1) having a main frame (8), a frame element (10) which is arranged on the main frame (8) and supports a loading board (9), a plurality of sowing coulter units (5) which are articulated on the main frame (8) via holding elements for the spreading of seeds to be distributed, and having a covering and/or pressing apparatus (12) which comprises at least one carrying beam (13) which is arranged transversely with respect to the driving direction (F), is fastened to at least one carrying arm (15) which protrudes to the front in the driving direction (F) and is fastened in the front region in an articulated manner, and on which carrying beam (13) a plurality of covering and/or pressing elements (14) are arranged transversely with respect to the driving direction (F), **characterized in that**, by means of a central setting element (22), the covering and/or pressing apparatus (12) is lifted out, lowered and/or loaded with a pressure against the soil, the covering and/or pressing apparatus (12) comprising a crossmember (16) which is arranged mounted on the main frame (8) such that it can be rotated about an axis which runs horizontally transversely with respect to the driving direction (F), and the at least one carrying arm (15) being fastened in its front region to the crossmember (16) via spring elements (17).

2. Seeding machine (1) according to Claim 1, **characterized in that** an actuating lever (21) is connected to the crossmember (16) in a positively locking manner and fixedly so as to rotate with it.

3. Seeding machine (1) according to Claim 2, **characterized in that** a first side of the central setting element (22) is articulated on the actuating lever (21) by means of a joint-like connection.

4. Seeding machine (1) according to at least one of the preceding claims, **characterized in that** the central setting element (22) is of variable-length configuration, for example as a threaded spindle or as a hydraulic cylinder.

5. Seeding machine (1) according to Claim 3, **characterized in that** the second side of the central setting element (22) is articulated on the main frame (8) .

6. Seeding machine (1) according to at least one of the preceding claims, **characterized in that** the at least one carrying arm (15) of the covering and/or pressing apparatus (12) is fastened to the crossmember (16) so as to encompass the crossmember (16) of the covering and/or pressing apparatus (12) with inclusion of spring elements (17).

7. Seeding machine (1) according to at least one of the preceding claims, **characterized in that** the spring elements (17) are manufactured from rubber or plastic.

8. Seeding machine (1) according to Claim 4, **characterized in that** a length change of the variable-length central setting element (22) brings about a rotation of the rotatably mounted crossmember (16).

9. Seeding machine (1) according to at least one of the preceding claims, **characterized in that** a rotation of the rotatably mounted crossmember (16) brings about a vertical pivoting movement of the carrying arm (5) of the covering and/or pressing apparatus (12).

10. Seeding machine (1) according to at least one of the preceding claims, **characterized in that** influencing of the working pressure of the covering and/or pressing apparatus (12) is brought about by way of a rotation of the rotatably mounted crossmember (16) in the case of the covering and/or pressing apparatus (12) being placed on the soil.

11. Seeding machine (1) according to at least one of the preceding claims, **characterized in that** at least one jib (19) is fastened to the crossmember (16) in a manner which lies at least approximately opposite the at least one carrying arm (15).

12. Seeding machine (1) according to Claim 11, **characterized in that** the at least one jib (19) is suitable for acting as a stop element (20) against the main frame (8) .

## Revendications

1. Semoir agricole (1), présentant un cadre principal (8), un élément de cadre (10) portant une passerelle de chargement (9) disposée au niveau du cadre principal (8), plusieurs unités de socs de semoir (5) articulées au cadre principal (8) par le biais d'éléments de fixation pour épandre les semences à distribuer, ainsi qu'un dispositif de fermeture de sillon et/ou de pressage (12) qui comprend au moins une poutre de support (13) disposée transversalement à la direction de conduite (F), qui est fixée au niveau d'au moins un bras de support (15) fixé de manière articulée dans la région avant, faisant saillie vers l'avant dans la direction de conduite (F) et au niveau de laquelle poutre de support sont disposés, transversalement à la direction de conduite (F), plusieurs éléments de fermeture de sillon et/ou de pressage (14),
**caractérisé en ce que** le dispositif de fermeture de sillon et/ou de pressage (12) est soulevé, abaissé et/ou sollicité en pression contre le sol au moyen d'un élément d'ajustement central (22), le dispositif de fermeture de sillon et/ou de pressage (12) comprenant une traverse (16) qui est disposée sur le cadre principal (8) de manière supportée à rotation autour d'un axe s'étendant horizontalement transversalement à la direction de conduite (F), et l'au moins un bras de support (15) étant fixé à la traverse (16) dans sa région avant par le biais d'éléments de ressort (17).

2. Semoir (1) selon la revendication 1, **caractérisé en ce qu'**un levier de réglage (21) est connecté par engagement par correspondance de formes et de manière solidaire en rotation à la traverse (16).

3. Semoir (1) selon la revendication 2, **caractérisé en ce qu'**un premier côté de l'élément d'ajustement central (22) est articulé au levier de réglage (21) au moyen d'une connexion de type articulation.

4. Semoir (1) selon au moins l'une quelconque des revendications précédentes, **caractérisé en ce que** l'élément d'ajustement central (22) est réalisé de manière à avoir une longueur variable, par exemple sous forme de broche filetée ou de cylindre hydraulique.

5. Semoir (1) selon la revendication 3, **caractérisé en ce que** le deuxième côté de l'élément d'ajustement central (22) est articulé au cadre principal (8).

6. Semoir (1) selon au moins l'une quelconque des revendications précédentes, **caractérisé en ce que** l'au moins un bras de support (15) du dispositif de fermeture de sillon et/ou de pressage (12) est fixé par le biais d'éléments de ressort (17) à la traverse (16), en entourant la traverse (16) du dispositif de fermeture de sillon et/ou de pressage (12).

7. Semoir (1) selon au moins l'une quelconque des revendications précédentes, **caractérisé en ce que** les éléments de ressort (17) sont fabriqués en caoutchouc ou en plastique.

8. Semoir (1) selon la revendication 4, **caractérisé en ce qu'**une variation de longueur de l'élément d'ajustement central (22) de longueur variable provoque une rotation de la traverse (16) supportée à rotation.

9. Semoir (1) selon au moins l'une quelconque des revendications précédentes, **caractérisé en ce qu'**une rotation de la traverse (16) supportée à rotation provoque un mouvement de pivotement vertical du bras de support (5) du dispositif de fermeture de sillon et/ou de pressage (12).

10. Semoir (1) selon au moins l'une quelconque des revendications précédentes, **caractérisé en ce qu'**une rotation de la traverse (16) supportée à rotation lorsque le dispositif de fermeture de sillon et/ou de pressage (12) est posé sur le sol entraîne une influence de la pression de travail du dispositif de fermeture de sillon et/ou de pressage (12).

11. Semoir (1) selon au moins l'une quelconque des revendications précédentes, **caractérisé en ce qu'**au moins un bras en porte-à-faux (19) au moins approximativement opposé à l'au moins un bras de support (15) est fixé à la traverse (16).

12. Semoir (1) selon la revendication 11, **caractérisé en ce que** l'au moins un bras en porte-à-faux (19) est apte à agir en tant qu'élément de butée (20) contre le cadre principal (8).
